# EUROPEAN PATENT APPLICATION

(11) **EP 1 650 753 A1**
(43) Date of publication of application: **26.04.2006**
(21) Application number: 04747790.6
(22) Date of filing: 14.07.2004
(51) Int. Cl.: G11B 7/26

(54) **METHOD OF MANUFACTURING INFORMATION RECORDING MEDIUM AND INFORMATION RECORDING MEDIUM**

(30) Priority: 18.07.2003 JP 2003199242
(71) Applicant: Idemitsu Technofine Co. Ltd, Sumida-ku, Tokyo 130-0015 (JP)
(72) Inventor: FUKATSU, Fumioki, Sodegaura-shi, Chiba 2990205 (JP); MIKAMI, Satoshi, Sumida-ku, Tokyo 1300015 (JP)
(74) Representative: Skone James, Robert Edmund
(86) International application number: PCT/JP2004/010375
(87) International publication number: WO 2005/008651

(57) **Abstract**

There are provided a method of manufacturing an information recording medium 1 having a water-based ink absorbing layer 2 on a surface of a base material 3, and the information recording medium 1 obtained by the manufacturing method.

The method includes: (1) coating the surface of the base material with a water-based ink absorbent containing a water-absorptive filler to form a coated layer 2a;
(2) covering a surface of the coated layer 2a with a cover material 10;
(3) irradiating the coated layer 2a with active energy beam to cure the coated layer 2a; and
(4) removing the cover material 10 from the coated layer 2a.

## Description

### Technical Field

The present invention relates to a method of manufacturing an information recording medium having a water-based ink absorbing layer excellent in surface smoothness and surface gloss as well as in ink-absorbability, and to the information recording medium manufactured by the method.

### Background Art

Conventionally, in the field of information processing, there have been widely used information recording media that can electrically record, reproduce and re-write information. The known information recording media may be information recording media, such as a compact disc (CD), a digital video disc (DVD), etc. as an optical information recording medium having an information recording section (an information recording layer) on a resin base material, or may be information recording media such as a flexible disk (FD), a magnet-optical (MO) disk, a mini disk (MD), a cassette tape, etc. having an information recording section accommodated in a resin molded base material like a cartridge.

Such information recording medium has information recording ability, and besides, index for recorded contents, and various decorative designs are generally printed on a surface of the information recording medium. For printing, a known printing method like ink-jet printing or screen printing is employed.

Meanwhile, since a resin surface of the information recording medium is not ink-absorptive, an ink absorbing layer is formed on the resin surface to perform printing on the ink absorbing layer in order to perform the ink-jet printing on the resin surface. For example, a paper or a CD-R corresponding to an ink-jet printer has the ink absorbing layer by coating or printing.

To ensure the absorbability of the ink absorbing layer, the ink absorbing layer needs an inorganic or organic water-absorptive filler (a pigment) to be compounded (e.g., see Document 1; JP-A-5-59694, claim 1, paragraph 0028, etc.), and at the same time, in terms of printability of the ink absorbing layer, the ink absorbing layer also needs surface smoothness and surface gloss to obtain sharp and good-looking printed images in addition to the high ink-absorbability.

When the ink absorbing layer is formed on the optical information recording medium, an ink polymerizable and curable due to energy beam such as UV (ultraviolet) ray or EB (electron beam) is frequently printed by screen printing. For example, there has been proposed a method of forming an ink absorbing layer on a surface of an optical information recording medium using polymerizing resin with a UV-curable hydrophilic monomer compounded (e.g., see Document 2; JP-A-7-44888, claim 1, Fig. 2, etc.). In addition, there have been proposed various means for providing an ink absorbing layer on a surface of a cartridge accommodating an information recording section (e.g., see Document 3; JP-A-11-213597, paragraphs 0006, 0007, etc.).

However, while the ink absorbing layers disclosed in the above-mentioned Documents require the water-absorptive filler (containing a pigment) to be compounded for ink-absorbability, the layer with the filler compounded ordinary becomes a matte surface, thus failing in satisfying the demand on the surface smoothness and the surface gloss of the ink absorbing layer.

For example, according to the method disclosed in Document 2, since the ink-absorbability is not enough only with the hydrophilic monomer, a water-absorptive filler (a pigment) must be added to the ink absorbing layer. And also in Document 2, the surface should be roughen by compounding a water-absorptive filler (a pigment) such as silica, which deteriorates the smoothness and gloss on the surface of the ink absorbing layer.

As mentioned above, in the related arts, it was in fact extremely difficult to provide the smoothness and gloss to the surface of the information recording medium, namely to the ink absorbing layer containing the water-absorptive filler.

### Disclosure of the Invention

An object of the present invention is to provide a method with ease for manufacturing an information recording medium and the information recording medium manufactured by the method, both having a water-based ink absorbing layer excellent in surface smoothness and surface gloss as well as in ink-absorbability, and allowing ink-jet printing etc. to be properly performed.

A method according to an aspect of the present invention is a method of manufacturing an information recording medium having a water-based ink absorbing layer on a surface of a base material, the method including a procedure for forming the water-based ink absorbing layer. The procedure includes the steps of:
(1) coating the surface of the base material with a water-based ink absorbent containing a water-absorptive filler to form a coated layer;
(2) covering a surface of the coated layer with a cover material;
(3) irradiating the coated layer with active energy beam to cure the coated layer; and
(4) removing the cover material from the coated layer.

A method according to another aspect of the present invention is a method of manufacturing an information recording medium having a water-based ink absorbing layer on a surface of a base material, the method including a procedure for forming the water-based ink absorbing layer. The procedure includes the steps of:
(1a) coating a surface of a cover material with a water-based ink absorbent containing a water-absorptive filler to form a coated layer;
(2a) covering a surface of the coated layer with the base material;
(3) irradiating the coated layer with active energy beam to cure the coated layer; and
(4) removing the cover material from the coated layer.

An information recording medium according to still another aspect of the present invention is obtained by the above-described manufacturing method.

An information recording medium according to yet another aspect of the present invention has a water-based ink absorbing layer containing a water-absorptive filler on a surface of a base material, wherein centerline average roughness (Ra) of the water-based ink absorbing layer is 0.25 µm or smaller, and glossiness of the water-based ink absorbing layer is 48% or higher.

In the aspect of the present invention, the following elements can be used for the base material and the coated layer.

According to the information recording medium obtained by the aspect of the present invention, the surface of the base material has the water-based ink absorbing layer which contains the water-absorptive filler for making the color of the water-based ink be appeared by absorbing the water-based ink applied on the information recording medium, and is cured by the irradiation of the active energy beam such as UV (ultraviolet) ray or EB (electron beam).

The water-absorptive filler contained in the water-based ink absorbing layer may be an inorganic filler or an organic filler.

For instance, the inorganic filler may be silica, talc, calcium carbonate, barium sulfate, zeolite, etc. The organic filler may be natural organic fine powder (such as collagen, silk, cellulose, starch, chitin, chitosan and shell membrane), or water-absorptive resin powder (power such as water-absorptive acrylic resin and water-absorptive polyester resin). When using the inorganic and organic filler, one item may be used by itself, or two or more items may be combined.

In the aspect of the present invention, it is preferable to use the silk, the cellulose, the collagen, the starch, the water-absorptive resin powder, the silica, the calcium carbonate or the talc among the above-mentioned items in terms of film property and stability in formation of the water-based ink absorbing layer, as well as printability etc. of the water-based ink absorbing layer.

The mean particle size of the water-absorptive filler is preferably within a range of 0.1 to 20 µm, and is more preferably within a range of 1 to 8 µm. Setting the mean particle size of the water-absorptive filler within the above-described range is preferable, because not only the water-absorptive filler is easily handled, but also the information recording medium excellent in the water-based ink-absorbability and the printing ability can be provided.

In addition, the content of the water-absorptive filler is preferably 5 wt% or more, more preferably 10 wt% or more, and most preferably 15 wt% or more so that the water-based ink-absorbability is sufficiently given to the surface of the water-based ink absorbing layer. Note that, a typical water-based ink absorbing layer containing the water-absorptive filler by 5 wt% or more causes a matte surface, but the water-based ink absorbing layer of the information recording medium according to the aspect of the present invention can provide a glossy surface.

Incidentally, the upper content limit of the water-absorptive filler is preferably 50 wt% or less.

And a coating agent compounded in the water-based ink absorbing layer may be any material as long as the material is polymerizable by the irradiation of the active energy beam such as the UV or the EB. For instance, a generally used UV-curable coating agent, EB-curable coating agent, etc. (including a paint and an ink), or raw material contained in these agents can preferably be used.

The raw material may be various types of polymerizing material. In particular, materials having at the end a reactive double bond or various reactive monomers such as an acrylate monomer and a methacrylate monomer are often used. To be more specific, the typical materials may be 2-hydroxyethyl acrylate, 2-hydroxypropyl acrylate, methyl methacrylate, ethyl methacrylate, triethylene glycol diacrylate, methoxypolyethylene glycol acrylate, etc. A reactive monomer with ring-opening polymerization such as ethylene glycol diglycidyl ether is also applicable. A derivative with polyethylene glycol etc. being introduced to the above-described material is applicable. And, an oligomer or a polymer formed of the above-described monomer can appropriately be used. For instance, polyisobutyl methacrylate etc. may be used. Further, it is advisable to add a hydrophilic reactive monomer to enhance ink-absorbability. For instance, N,N-dimethylacrylamide, acryloyl morpholine, etc. can be used by singularly or in combination.

Incidentally, additives such as an antiforming agent, a disparsant, a water retention agent, a thickener, a mold releasing agent, a preservative, a coloring pigment, a water resistant agent, a humectant, a fluorescent paint, a UV absorbent, etc. can be compounded in the water-based ink absorbing layer as long as the advantage of the aspect of the present invention is not counteracted.

The information recording medium of the aspect of the present invention has the water-based ink absorbing layer which contains the above-mentioned water-absorptive filler on the surface of the base material, the water-based ink absorbing layer being cured by the irradiation of the active energy beam. The active energy beam may be the UV ray or the EB.

And, the base material with the water-based ink absorbing layer being provided on the surface may be a configuration formed by a resin board, represented by an optical information recording medium such as a compact disc (CD), a digital video disk (DVD), a CD-R, a CD-RW, a DVD-R, a DVD-RW, a DVD+R, a DVD+RW, a DVD-RAM, etc. In the configuration, the base material itself defines the information recording medium. On the other hand, in a case of a configuration of the information recording medium in which an information recording section is accommodated in a resin mold like a cartridge, the resin mold like the cartridge accommodating the information recording section defines the base material. Such configuration may be a flexible disk (FD), a magnet-optical (MO) disk, a mini disk (MD), a cassette tape, etc.

The thickness of the water-based ink absorbing layer provided on the surface of the base material is preferably within a range of 3 to 50 µm, and is more preferably within a range of 10 to 20 µm when being cured. If the thickness of the water-based ink absorbing layer is smaller than 3 µm, ink-bleeding may occur due to insufficient absorbability, and the ink may not be dried quickly. If the thickness of the water-based ink absorbing layer exceeds 50 µm, the thickness is not desirable since the information recording medium to be manufactured is likely curved due to contraction in volume when the water-based ink absorbing layer is cured.

As described above, the information recording medium of the aspect of the present invention is provided with the water-based ink absorbing layer cured by irradiating the surface of the base material with the active energy beam. Therefore, the centerline average roughness (Ra) of the water-based ink absorbing layer is preferably 0.25 µm or smaller, and more preferably 0.20 µm or smaller. Since the centerline average roughness (Ra) of the water-based ink absorbing layer forming the information recording medium is 0.25 µm or smaller, the surface smoothness of the water-based ink absorbing layer is further enhanced, thus preferably providing the information recording medium that realizes the information with high image quality and high dynamic range.

Additionally, the glossiness of the water-based ink absorbing layer is preferably 48% or higher, and more preferably 78% or higher. Since the glossiness of the water-based ink absorbing layer forming the information recording medium is 48% or higher, there can preferably be provided the information recording medium having on the surface of the base material the water-based ink absorbing layer excellent in the surface gloss and the surface smoothness as well as having the sufficient absorbability of the water-based ink.

Incidentally, the glossiness of the water-based ink absorbing layer can be measured in compliance with the 60 degree mirror glossiness specified in JIS K7105.

In the method of manufacturing the information recording medium of the aspect of the invention, as a way for forming a water-based ink absorbing layer on a surface of a base material may be conducted according to a procedure including the steps of:
(1) coating the surface of the base material with a water-based ink absorbent containing a water-absorptive filler to form a coated layer;
(2) covering a surface of the coated layer with a cover material;
(3) irradiating the coated layer with active energy beam to cure the coated layer; and
(4) removing the cover material from the coated layer (a first procedure).

First, (1) the above-described water-absorptive filler and the coating agent (and various types of additives when necessary) are mixed to prepare the ink absorbent. Then, the surface of the base material is coated with the ink absorbent to form the layer (the coated layer) with the water-based ink absorbent being coated.

Incidentally, the method of forming the coated layer by coating the surface of the base material with the ink absorbent may employ comma coating, knife coating, die coating, spin coating, etc. as a known coating method, or screen printing, gravure printing, flexographic printing, pad printing, etc. as a known printing method.

Coating condition of the water-based ink absorbent is not particularly limited. For instance, a screen of 80 to 350 mesh can be used when performing the silk-screen printing on the surface of the base material, and it is preferable to perform printing with a screen of 170 to 350 mesh.

Coating amount shall be approximately 30g/m² when performing the screen printing with a screen of 200 mesh. Such coating amount is exemplified in the case of performing the screen printing with the screen of 200 mesh, however, the coating amount may be approximately 20 to 40g/m² as a guide for other coating methods or printing methods.

Then, (2) the surface of the coated layer is covered with the cover material such as the over film before the active energy beam such as the UV ray or the EB is irradiated on the coated layer.

Incidentally, the over film as the cover material for covering the coated layer with the water-based ink absorbent being coated is preferably be a film excellent in transmissivity of the energy beam such as the UV ray, and in mold releasing performance to part from the water-based ink absorbing layer when the coated layer is cured to be the water-based ink absorbing layer. In particular, the film may preferably be a resin film formed of resin material such as polyester, acryl, polycarbonate, nylon, etc., or glass, treated with the mold releasing treatment. Alternatively, a paper etc. treated with mold releasing treatment may be used.

Note that, "a film" in the specification includes a thick sheet substance or a platy substance.

And, in a case where the surface is not additionally treated with the mold releasing treatment as the post-process, a film formed of polypropylene resin, polyethylene resin, or polyolefin resin having low surface activity may be used. There is no problem even if the film treated with the mold releasing treatment is applied.

The over film is preferably excellent in the surface smoothness, and besides, the centerline average roughness (Ra) of the surface of the film is preferably 0.5 µm or smaller, more preferably 0.3 µm or smaller, and most preferably 0.2 µm or smaller. Since the surface roughness of the over film is 0.5 µm or smaller, the surface gloss and the surface smoothness of the water-based ink absorbing layer may be enhanced.

The thickness of the over film shall be within a range of 10 µm to 10 cm, and is preferably within a range of 50 µm to 5 mm, for easy handling.

Material of the over film as the cover material is preferably selected according to the curing step of the water-based ink absorbing layer (heat resistance or UV intensity). To be more specific, since the irradiation step of the UV ray or the EB is generally influenced by thermal hysteresis, an A-PET film of non-oriented type is likely contracted due to the thermal hysteresis even in the case of polyester, which causes extremely rough surface. Similarly, non-oriented polypropylene etc. might be contracted and thus not be applicable, and oriented polyester or polypropylene is preferable for use.

In addition, when performing the UV-curing processing, a light resistant agent such as the UV absorbent possibly deteriorates the UV transmissivity during the application of the over film, which possibly causes the ink absorbing layer to be insufficiently cured. Therefore it is preferable to select the material by taking such possibilities into consideration.

When the cover material such as the over film covers the surface of the coated layer in the above-described manner, (3) the active energy beam is irradiated on the coated layer to cure it, and the water-based ink absorbing layer is thus formed. Irradiation condition of the active energy beam is not particularly limited, and can appropriately be determined according to the kind of the UV-curable (or EB-curable) coating agent applied to the water-based ink absorbing layer or the thickness of the water-based ink absorbing layer.

When the water-based ink absorbent is cured by the irradiation of the active energy beam, and thus the water-based ink absorbing layer is formed on the surface of the base material, (4) the over film is parted and removed from the water-based ink absorbing layer, and thus the information recording medium having the cured water-based ink absorbing layer can be obtained.

The method of manufacturing the information recording medium of the aspect of the present invention can provide the information recording medium having on the surface of the base material the water-based ink absorbing layer excellent in the surface gloss and the surface smoothness as well as allowing the ink-jet printing etc. to be properly performed, easily according to the first procedure.

There may be another procedure that a press mold as the cover material excellent in the mold releasing performance and the UV transmissivity is pressed on the coated layer in which the surface of the base material is coated with the water-based ink absorbent to form the water-based ink absorbing layer by curing the coated layer by the irradiation of the energy beam such as the UV ray, and then the press mold is removed. Even with this procedure, the information recording medium having the cured water-based ink absorbing layer can be obtained.

According to the procedure, workability is enhanced compared to the case of using the over film, and the press mold can be used repeatedly, thereby saving the cost and being pro-environment.

Incidentally, the profile of the press mold shall correspond to the size of the optical information recording medium (a circular discoid profile etc.), and besides, its surface is preferably formed of material excellent in the surface smoothness and having the same surface roughness as the above-mentioned over film, as well as being preferably a platy profile having the rigidity not to be deformed in the covering step etc.

Or, a press mold with a holder may be provided to the over film or the platy base material having the same surface smoothness as the over film, so that the holder is grabbed to gently move the covering surface toward the coated layer in the covering step with the coated layer, thereby easily performing the covering step. The provision of the holder enables a robot arm to perform the step in an automated production line. Herein, the structure of the holder is preferably the one that can transmit the UV ray.

Incidentally, the profile of the press mold can appropriately be modified according to working environment, conditions and the profile of the information recording medium, and in a case where the tip of the robot arm is a suction disk, the holder may not be necessary, but may be a thick platy over film.

The surface of the press mold (the covering surface) to cover the coated layer is also preferably in excellent in the surface smoothness like the over film. For example, the centerline average roughness (Ra) is preferably 0.5 µm or smaller, more preferably 0.3 µm or smaller, and most preferably 0.2 µm or smaller. Additionally, the covering surface of the press mold is preferably treated with mold releasing treatment.

In the method of manufacturing the information recording medium of the aspect of the present invention, the procedure for forming the water-based ink absorbing layer on the surface of the base material may be the following (a second procedure including (1a) to (4)) instead of the above-described procedure. Even with the procedure, there can easily be provided the information recording medium having on the surface of the base material the water-based ink absorbing layer excellent in the surface gloss and the surface smoothness as well as allowing the ink-jet printing to properly be performed. The second procedure including the steps of:
(1a) coating a surface of a cover material with a water-based ink absorbent containing a water-absorptive filler to form a coated layer;
(2a) covering a surface of the coated layer with the base material;
(3) irradiating the coated layer with active energy beam to cure the coated layer; and
(4) removing the cover material from the coated layer.

To be more specific, first, (1a) the over film with the above-described specifications is coated with the water-based ink absorbent to form the coated layer, then (2a) the surface of the base material is covered with the surface of the coated layer, (3) the active energy beam such as the UV ray or the EB is irradiated on the coated layer to cure it in the same manner as the above-mentioned (3), and therefore, the coated layer is cured to integrate the water-based ink absorbing layer with the surface of the base material.

After the coated layer is cured and integrated with the base material, (4) the over film is parted and eliminated, like the above-mentioned (4), so that the information recording medium having the cured water-based ink absorbing layer can be obtained.

Incidentally, in the first and second procedures, in the case where the covering material such as the over film is parted and removed after the water-based ink absorbing layer is cured, the timing of the removal may be right after the water-based ink absorbing layer is cured, or be the time when the information recording medium is actually used, so that the over film is removed right before use.

In other words, the information recording medium may be distributed into the market while the cover material being covered, i.e., not removed after the coated layer is cured by the irradiation of the active energy beam, so that the over film can be utilized as a protection layer of the water-based ink absorbing layer. And, as mentioned above, the cover material such as the over film can be removed before use.

An information recording medium according to a further aspect of the present invention has a base material and a water-based ink absorbing layer on a surface of the base material, the water-based ink absorbing layer being formed by a procedure. The procedure includes the steps of:
(1) coating the surface of the base material with a water-based ink absorbent containing a water-absorptive filler to form a coated layer;
(2) covering a surface of the coated layer with a cover material;
(3) irradiating the coated layer with active energy beam to cure the coated layer; and

### (4a) not removing the cover material from the coated layer.

An information recording medium according to still a further aspect of the present invention has a base material and a water-based ink absorbing layer on a surface of the base material, the water-based ink absorbing layer being formed by a procedure. The procedure includes the steps of:
(1a) coating a surface of a cover material with a water-based ink absorbent containing a water-absorptive filler to form a coated layer;
(2a) covering a surface of the coated layer with the base material;
(3) irradiating the coated layer with active energy beam to cure the coated layer; and
(4a) not removing the cover material from the coated layer.

Incidentally, a particular shape such as a fine air vent groove, a grain and a pattern is preferably formed on the surface of the over film or the press mold as long as the shape does not affect the advantage of the present invention, so as to prevent air bubbles from being generated when the over film etc. closely contacts to the coated layer. Or, the cover material may cover from the end while the air bubbles being pushed out, to form the water-based ink absorbing layer.

The information recording medium of the present invention is a medium that electrically records information, which may be a cassette tape, an magnet-optical (MO) disk, a flexible disk (FD), a mini disk (MD), etc., or, an optical information recording medium such as a compact disc (CD), a digital video disc (DVD), etc. The optical information recording medium includes a CD-R, a CD-RW, a DVD-R, a DVD-RW, a DVD+R, a DVD+RW, a DVD-RAM, etc.

The cassette tape, the magnet-optical (MO) disk, the flexible disk (FD), the mini disk (MD), etc. each are accommodated in a resin molded cartridge as the base material, and in such case, the water-based ink absorbing layer is provided on the surface of the resin mold such as the cartridge, i.e., the base material.

On the other hand, as for the optical information recording medium such as the compact disc (CD), the digital video disc (DVD), etc., in the case where the disk itself is configured as the information recording medium, the water-based ink absorbing layer is provided on a side (a label surface) opposite to the information recording section of the disc. Or, in the case of the DVD-RAM etc. where the information recording section is accommodated in the resin molded cartridge as the base material, the water-based ink absorbing layer is provided on the cartridge. The aspect of the present invention can not only be applied to the water-based ink absorbing layer on the cartridge, but also be applied to the water-based ink absorbing layer on the label surface of the disc.

Preferably, in the information recording medium of the aspect of the present invention, the content of the water-absorptive filler may be 5 to 50 wt% relative to the water-based ink absorbing layer.

With this configuration, since the content of the water-absorptive filler in the water-based ink absorbing layer forming the information recording medium is within the specific range of 5 to 50 wt%, the ink-absorbability of the water-based ink absorbing layer can be enhanced, thus providing the information recording medium excellent in the ink-absorbability.

And, when the water-absorptive filler is contained in the water-based ink absorbing layer by 5 wt% or more, the surface of the water-based ink absorbing layer is generally matte, however, the water-based ink absorbing layer of the information recording medium according to the aspect of the present invention is excellent in the surface gloss as mentioned above, thus providing the information recording medium with the surface being glossy.

Preferably, in the information recording medium of the aspect of the present invention, the water-absorptive filler may be selected from the group consisting of silk, cellulose, collagen, starch, water-absorptive resin powder, silica, calcium carbonate and talc.

With this configuration, since the kind of the absorbing filler in the water-based ink absorbing layer forming the information recording medium is specified, the ink-absorbability of the water-based ink absorbing layer can further be enhanced, so that film property and stability in formation of the water-based ink absorbing layer, as well as printability etc. of the water-based ink absorbing layer can further be enhanced.

### Brief Description of Drawings

Fig. 1 is a cross section showing an embodiment of an information recording medium of the present invention;
Figs. 2A to 2D are process drawings each showing a formation procedure of a water-based ink absorbing layer of the information recording medium of the present invention; and
Figs. 3A to 3D are process drawings each showing another formation procedure of a water-based ink absorbing layer of the information recording medium.

### Best mode for Carrying out the Invention

An embodiment of the present invention will be described below with reference to the attached drawings.

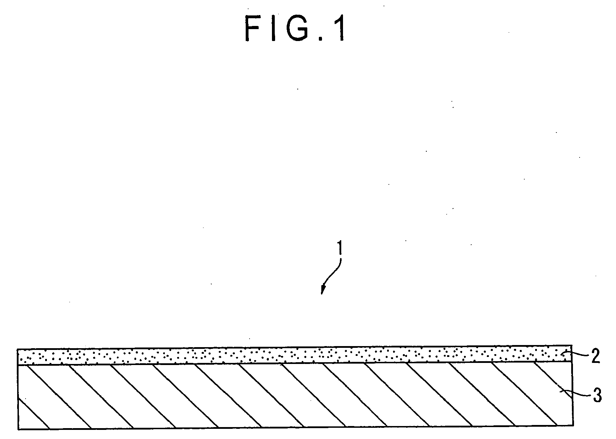

Fig. 1 is a cross section showing the embodiment of a laminated body of the present invention. Referring to Fig. 1, reference numerals 1, 2 and 3 respectively indicate an information recording medium, a water-based ink absorbing layer and a base material.

As shown in Fig. 1, the information recording medium 1 of the present embodiment is so formed that the water-based ink absorbing layer 2 which can be cured by irradiation of energy beam is provided on a surface of the disk-like base material 3.

Though not shown, a layer (an information recording layer) storing information of the information recording medium 1 of the present embodiment is included in a layer structure of the base material 3 in Fig. 1.

The water-based ink absorbing layer 2 of the information recording medium 1 contains a water-absorptive filler. The water-absorptive filler may be an organic filler or an inorganic filler such as silica, talc, calcium carbonate, silk, silk powder, cellulose, collagen, starch, water-absorptive resin powder, in terms of film property and stability in formation of the water-based ink absorbing layer, as well as printability etc. of the water-based ink absorbing layer.

In addition, a coating agent compounded for curing the water-based ink absorbing layer 2 by the irradiation of the energy beam such as UV (ultraviolet) ray or EB (electron beam) may be a known UV-curable coating agent or a known EB-curable coating agent.

In the present embodiment, the water-absorptive filler is contained in the water-based ink absorbing layer 2 by approximately 30 wt% on a solid basis. The content of the water-absorptive filler in the water-based ink absorbing layer 2 of the information recording medium 1 of the present invention is preferably 5 wt% or more, more preferably 10 wt% or more, and most preferably 15 wt% or more on a solid basis. Incidentally, the upper content limit of the water-absorptive filler is preferably 50 wt% or less.

The thickness of the water-based ink absorbing layer 2 is approximately 20 µm.

The base material 3 on which the water-based ink absorbing layer 2 is provided is formed by a disk board made of polycarbonate resin. And, the water-based ink absorbing layer 2 is provided on one side of the base material 3.

In the present embodiment, the water-based ink absorbing layer 2 of the information recording medium 1 is so formed that the surface of the base material 3 is coated with the water-based ink absorbent containing the water-absorptive filler to form a coated layer 2a, the coated layer 2a is covered with an over film 10, then the active energy beam is irradiated on the coated layer 2a to cure it, and then the over film 10 is parted and removed. Such forming procedure can easily provide the information recording medium 1 having on the surface of the base material 3 the water-based ink absorbing layer 2 excellent in surface gloss and surface smoothness as well as allowing ink-jet printing etc. to properly be performed.

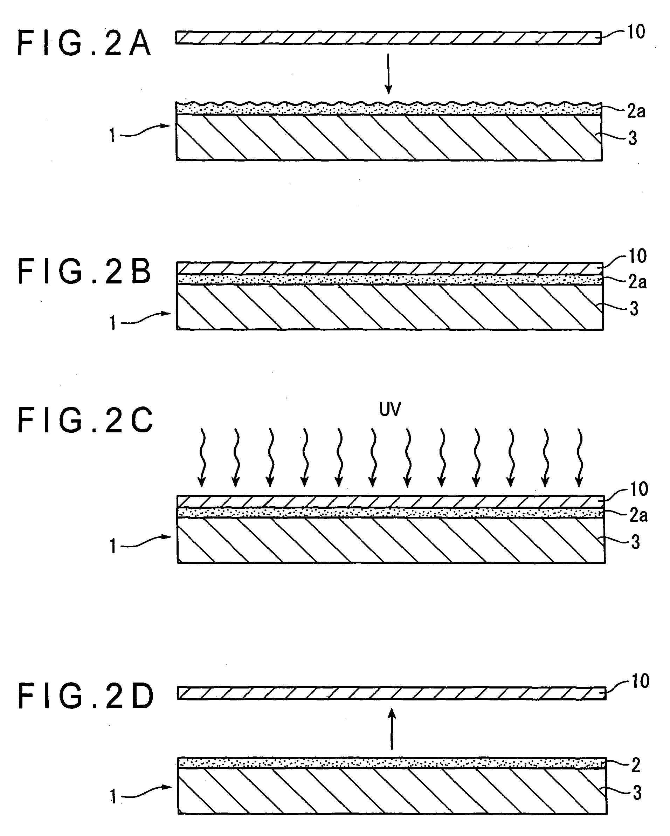

Hereinafter, the forming procedure of the water-based ink absorbing layer 2 will be described with reference to the process drawings shown in Figs. 2A to 2D.

First, the surface of the base material 3 is coated with the water-based ink absorbent containing the water absorptive filler and the UV-curable coating agent by known screen printing etc. such that the thickness of the water-based ink absorbing layer 2 is approximately 20 µm when being cured to form the coated layer 2a.

After the coated layer 2a is formed, a surface of the coated layer 2a is covered with the over film 10 as a cover material (Figs. 2A and 2B). The over film 10 as the cover material in the present embodiment employs a transparent film treated with mold releasing treatment on its surface, having surface roughness of approximately 0.14 µm, being made of polyester, having the thickness of approximately 50 µm, and being UV-transmissive.

Then, the UV ray is irradiated on the coated layer 2a by a known UV irradiator such as a UV irradiation device over the over film 10. By the irradiation of the UV ray, the coated layer 2a is cured (Fig. 2C). As the coated layer 2a is cured, by parting and removing the over film, the information recording medium 1 formed with the water-based ink absorbing layer 2 on the surface of the base material 3 can be obtained (Fig. 2D).

The glossiness of the water-based ink absorbing layer 2 of the information recording medium 1 obtained by the procedure is approximately 90%, and centerline average roughness (Ra) is approximately 0.2 µm.

According to the information recording medium 1 of the present embodiment, the following advantage can be attained.

Since the information recording medium 1 of the present embodiment has approximately 90% glossiness of the water-based ink absorbing layer 2 formed on the surface of the base material 3, there can be provided the information recording medium 1 having on the surface of the base material 3 the water-based ink absorbing layer 2 excellent in the surface gloss and the surface smoothness while having the absorbability of the water-based ink.

Since the centerline average roughness (Ra) of the water-based ink absorbing layer 2 is approximately 0.2 µm, the surface smoothness of the water-based ink absorbing layer 2 is further enhanced, thus preferably providing the information recording medium 1 that realizes the information with high image quality and high dynamic range.

Since the content of the water-absorptive filler in the water-based ink absorbing layer 2 is approximately 30 wt%, the ink-absorbability of the water-based ink absorbing layer 2 can be enhanced, thereby providing the information recording medium 1 with the excellent ink-absorbability.

It is obvious that the above-described embodiment merely shows an embodiment of the present invention, the present invention is not limited to the above-described embodiment, and includes modifications and improvements in the contents of the present invention as long as the object and the advantage of the present invention can be achieved. In addition, specific structures and profiles when implementing the present invention can be other structures and profiles as long as the object and the advantage of the present invention can be achieved.

For example, in the present embodiment, the content of the water-absorptive filler in the water-based ink absorbing layer 2 of the information recording medium 1 is approximately 30 wt%, however, it is not limited thereto, and the content of the water-absorptive filler may be any amount as long as the proper water-based ink-absorbability can be attained. As for the thickness and the kind of the water-based ink absorbing layer 2, the above description is merely an example, and the thickness and the kind of the water-based ink absorbing layer 2 can properly be determined as long as the object and the advantage of the present invention are not counteracted.

Similarly, the base material 3 is formed by the disc board made of the polycarbonate resin as an example, it is not limited thereto, and the base material may be a cartridge accommodating the information recording medium 1 such as the DVD-RAM, the cassette tape, the MO, etc. In such case, the water-based ink absorbing layer 2 can be formed on a surface of the base material 3 as the cartridge.

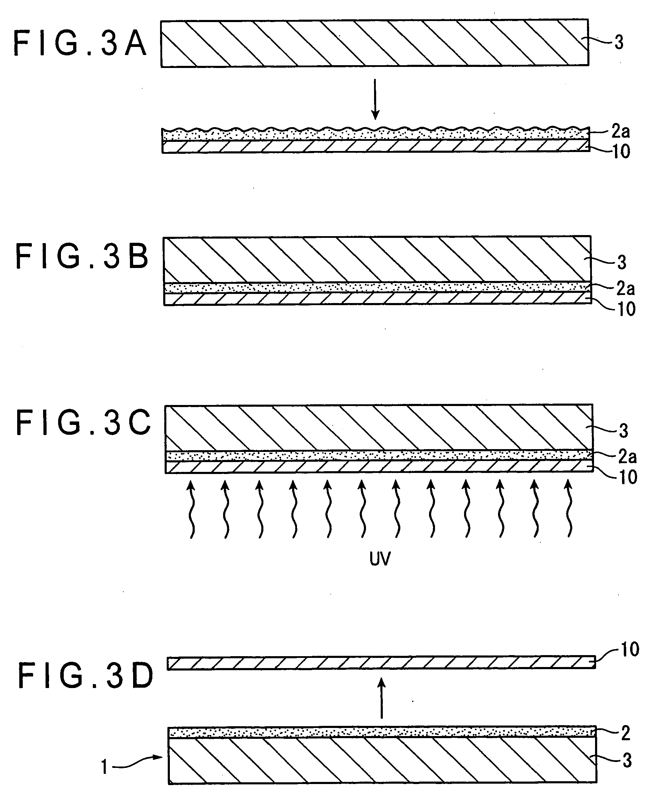

In the above-described embodiment, the water-based ink absorbing layer 2 of the information recording medium 1, as an example, is so formed that the surface of the base material 3 is coated with the water-based ink absorbent containing the water-absorptive filler to form the coated layer 2a, the coated layer 2a is covered with the over film 10 as the cover material, and then the UV ray is irradiated on the coated layer 2a to cure it, however, it is not limited thereto. For instance, as shown in Figs. 3A to 3D, the water-based ink absorbing layer 2 can be so formed that the surface of the over film 10 is coated with the water-based ink absorbent containing the water-absorptive filler to form the coated layer 2a, the coated layer 2a is covered with the base material 3, then the active energy beam is irradiated on the coated layer 2a to cure it and integrate it with the base material 3. Such forming procedure can also provide in a simple manner the information recording medium 1 having on the surface of the base material 3 the water-based ink absorbing layer 2 excellent in the surface gloss and the surface smoothness as well as allowing ink-jet printing etc. to properly be performed.

Figs. 3A to 3D are process drawings each showing another formation procedure of the water-based ink absorbing layer 2 in the information recording medium 1 of the present invention.

In the present embodiment, first, the surface of the over film 10 as the cover material having similar specification as described above and being treated with the mold releasing treatment is coated with the water-based ink absorbent, by known screen printing etc. such that the thickness of the water-based ink absorbing layer 2 is approximately 20 µm when being cured.

When the coated layer 2a is thus formed on the surface of the over film 10, the surface of the coated layer 2a is covered with a surface of the base material 3, on which the water-based ink absorbing layer 2 is formed (Figs. 3A and 3B).

Then, the UV ray is irradiated on the coated layer 2a by the known UV irradiation device over the over film 10. By the irradiation of the UV ray, the coated layer 2a is cured. At the same time, the coated layer 2a is fixed and integrated with the surface of the base material 3 by being cured (Fig. 3C).

As the coated layer 2a is cured and integrated with the surface of the base material 3, by parting and removing the over film 10, the information recording medium 1 formed with the water-based ink absorbing layer 2 on the surface of the base material 3 can be obtained (Fig. 3D).

The glossiness of the water-based ink absorbing layer 2 of the information recording medium 1 obtained by the procedure is approximately 136%, and the centerline average roughness Ra is approximately 0.113 µm.

As for still another formation procedure of the water-based ink absorbing layer 2, without limiting to the above embodiment, the water-based ink absorbing layer 2 may be so formed that the surface of the base material 3 is coated with the water-based ink absorbent containing the water-absorptive filler to form the coated layer 2a, the coated layer 2a is covered with a platy press mold with a holder, and then the active energy beam such as the UV ray is irradiated on the coated layer 2a to cure it.

The specific structures and the profiles described in the embodiment of the present invention can be any structures etc. as long as the object and the advantage of the present invention are not counteracted.

Next, the present invention will be described in further detail with Examples and Comparisons, however, these Examples and Comparisons do not narrow the description in the embodiment of the present invention.

### [Example 1]

### (A) Preparation of Water-based Ink Absorbent:

The water-based ink absorbent was prepared by mixing components "1." to "8." of the following formulation.

**(Formulation of Water-based Ink Absorbent)**

| Components | Contents (wt%) |
|---|---|
| 1. N,N-dimethylacrylamide | 24 |
| 2. hydroxyethyl acrylate | 14 |
| 3. hydroxypropyl acrylate | 14 |
| 4. polyisobutyl acrylate | 14 |
| 5. silk (natural organic fine powder silk) (mean particle size: 6 µm (Note 1)) | 30 |
| 6. photo polymerization initiator (Note 2) | 4 |
| 7. antiforming agent | as needed |
| 8. disparsant | as needed |

| | |
|---|---|
| (Note 1) manufactured by Idemitsu Technofine Co., Ltd. | |
| (Note 2) Darocure (TM) 1173 (manufactured by Nagase & Co., Ltd.) | |

### (B) Formation of Water-based Ink Absorbing Layer:

The surface of a commercially available disk-like CD-R (manufactured by Mitsubishi Chemical Corporation) as the base material was coated with the water-based ink absorbent prepared in the above-described (A) by screen printing with the screen of 200 mesh (coating amount: approx. 30g/m²) such that the thickness of the film is 20 µm when being cured to form the coated layer of the water-based ink absorbent on the surface of the base material.

Then, the surface of the coated layer was covered with the over film (a polyester film treated with mold releasing treatment on the surface, manufactured by Toyobo co., Ltd., thickness: 50 µm, surface roughness: 0.14 µm) which is the cover material not to get air bubbles in.

The coated layer was cured by irradiating it with the UV ray under the following conditions, then the over film was parted and removed, and thus the information recording medium of the present invention with the water-based ink absorbing layer being formed on the surface of the base material was manufactured.

**(Conditions of UV Ray Irradiation)**

| | |
|---|---|
| Device Name: | 1kw Exposure UV Irradiation Device (manufactured by Japan Storage Battery Co., Ltd.) |
| Lamp Distance: | 125 mm |
| Irradiation Time: | Approx. 15 sec. |

### [Example 2]

In Example 1, the information recording medium of the present invention was manufactured in the same manner as Example 1 except that the water-based ink absorbent was prepared according to the following modified formulation.

**(Formulation of Water-based Ink Absorbent)**

| Components | Contents (wt%) |
|---|---|
| 1. N,N-dimethylacrylamide | 34 |
| 2. hydroxyethyl acrylate | 20 |
| 3. hydroxypropyl acrylate | 19 |
| 4. polyisobutyl acrylate | 19 |
| 5. silica (mean particle size: 3.5 µm) | 5 |
| 6. photo polymerization initiator (Note 2) | 3 |
| 7. antiforming agent | as needed |
| 8. disparsant | as needed |

| | |
|---|---|
| (Note 2) Darocure (TM) 1173 (manufactured by Nagase & Co., Ltd.) | |

### [Example 3]

The water-based ink absorbent prepared in Example 1 (A) was printed by screen printing (coating amount: approx. 30g/m²) with the use of the screen of 200 mesh on the over film (a polyester film with the surface being treated with parting agent treatment) as the cover material having the same specifications as the one used in Examples 1 and 2 such that the thickness of the over film is 20 µm after being cured to form the coated layer of the water-based ink absorbent.

Then, using a CD-R (manufactured by Mitsubishi Chemical Corporation) was used as the base material, the surface of the base material was covered with the surface of the coated layer, and then the UV ray was irradiated thereto under the same conditions as Example 1 (B).

When the coated layer was cured by the irradiation of the UV ray, the over film was parted and removed, and thus the information recording medium of the present invention having the water-based ink absorbing layer integrated with the CD-R as the base material was provided.

### [Example 4]

In Example 1, the information recording medium of the present invention was manufactured in the same manner as Example 1 except that the platy press mold (surface roughness: 0.144 µm) made of polypropylene was used instead of the over film.

### [Example 5]

In Example 1, the information recording medium of the present invention was manufactured in the same manner as Example 1 except that a polycarbonate disk (Lexan film manufactured by SP Pacific K.K., thickness: 0.3 mm) being cut into a typical CD size was used as the base material, and a separator paper (manufactured by LINTEC Corporation, surface roughness: 0.2 µm) was used as the cover material. The UV ray was irradiated from the base material side.

### [Comparison 1]

In Example 1, the information recording medium was manufactured in the same manner as Example 1 except that the water-based ink absorbent was prepared according to the following formulation (not containing the silk powder as the water-absorptive filler).

**(Formulation of Water-based Ink Absorbent)**

| Components | Contents (wt%) |
|---|---|
| 1. N,N-dimethylacrylamide | 35 |
| 2. hydroxyethyl acrylate | 21 |
| 3. hydroxypropyl acrylate | 20 |
| 4. polyisobutyl alcohol | 20 |
| 5. photo polymerization initiator (Note 2) | 4 |
| 6. antiforming agent | as needed |
| 7. disparsant | as needed |

| | |
|---|---|
| (Note 2) Darocure (TM) 1173 (manufactured by Nagase & Co., Ltd.) | |

### [Comparison 2]

In Example 1, the information recording medium was manufactured by forming the water-based ink absorbing layer without the over film being covered.

To be more specific, the surface of the commercially available CD-R (manufactured by Mitsubishi Chemical Corporation) as the base material was coated with the water-based ink absorbent prepared in the above-described Example 1 (A) by screen printing (coating amount: approx. 30g/m²) with the screen of 200 mesh such that the thickness is 20 µm when being cured to form the coated layer of the water-based ink absorbent, in the same manner as Example 1.

Then, the UV ray was irradiated on the coated layer under the same conditions as Example 1 to cure the coated layer and thus to form the water-based ink absorbing layer, thereby manufacturing the information recording medium.

### [Examination 1]

The information recording media obtained by the above-described Examples 1 to 5, Comparisons 1 and 2 are compared and evaluated for (i) surface glossiness, (ii) gloss in visual evaluation, (iii) surface roughness (centerline average roughness), and (iv) ink-absorbability, under the following conditions. Evaluation results are shown in Table 1.

### (i) Surface Glossiness:

Evaluation was done by measuring the information recording media according to the 60 degree mirror glossiness specified in JIS K7105 using a glossmeter (VG2000: manufactured by Nippon Denshoku Industries Co., Ltd.).

### (ii) Gloss:

10 panelists checked whether the information recording media has surface gloss with visual observation to judge the results according to the following judgment standard.

**(Judgment Criterion)**

| Judgment: | Contents |
|---|---|
| oo: | All 10 panelists evaluated that "surface gloss is found" |
| o: | 5 to 9 panelists evaluated that "surface gloss is found" |
| Δ: | 1 to 4 panelists evaluated that "surface gloss is found" |
| ×: | All 10 panelists evaluated that "surface gloss is not found" |

### (iii) Surface Roughness (Centerline Average Roughness):

Using Electron Beam 3D Roughness Analyzer (ESA-2000: manufactured by Elionix Inc.), the centerline average roughness (Ra) was measured at 5 points with the magnification 1000 times, and an average value was obtained as a result.

### (iv) Ink-absorbability:

By using a commercially available ink-jet printer (MJ-3000C: manufactured by SEIKO EPSON CORPORATION), pattern printing with 4-color ink was performed on the information recording medium. When 15 minutes elapsed after printing, a good quality paper was pressed to the information recording medium, and whether the ink is transferred on the good quality paper was checked. As for the judgment standard, "o" was given when the ink is not transferred, whereas "x" was given when the ink is transferred.

### (Evaluation Results)

**Table 1**

| | Water-absorptive Filler | Glosses (%) | Gloss in Visual Evaluation | Surface Roughness | Ink -absorbability | Overall Evaluation |
|---|---|---|---|---|---|---|
| Example 1 | Found | 91.2 | oo | 0.163 | o | o |
| Example 2 | Found | 132 | oo | 0.143 | o | o |
| Example 3 | Found | 136 | oo | 0.113 | o | o |
| Example 4 | Found | 78.1 | oo | 0.173 | o | o |
| Example 5 | Found | 48.1 | o | 0.250 | o | o |
| Comparison 1 | Not Found | 29.4 | Δ | 0.320 | x | x |
| Comparison 2 | Found | 5.7 | x | 1.068 | o | x |

As seen in the results of Table 1, the information recording media respectively obtained by Examples 1 to 5 had the water-based ink absorbing layers with proper ink-absorbability, 48% or higher glossiness, and excellent surface gloss. At the same time, the centerline surface roughness (Ra) was small as 0.25 µm, and the surface smoothness was preferable.

In Example 2, utilizing the silica of the inorganic filler as the water-absorptive filler, it was ensured that the same advantage as Example 1 utilizing the silk powder of the organic filler can be attained. Even in Examples 3 and 4 different from Example 1 in the formation procedure of the water-based ink absorbing layer, the same results as Example 1 could be obtained.

Meanwhile, Comparison 1 not containing the water-absorptive filler had lower ink-absorbability of the water-based absorbing layer. And, Comparison 2 in which the water-based ink absorbing layer was formed without the over film being covered resulted in extremely low surface gloss as well as low surface smoothness of the water-based ink absorbing layer. Accordingly, it was ensured that the water-based ink absorbing layer should be formed by covering material, such as the over film etc. as the cover material excellent in the surface smoothness in some measure, to provide the water-based ink-absorbing layer with preferable surface gloss and surface smoothness.

### Industrial Applicability

The present invention can be applied to a method of manufacturing an information recording medium having a water-based ink absorbing layer excellent in surface smoothness and surface gloss as well as in ink-absorbability, and to the information recording medium. In particular, the present invention can be applied to an information recording medium in which an information recording section (an information recording layer) is provided on a resin base material, i.e. optical information recording medium such as a compact disc (CD), a digital video disc (DVD), etc. and an information recording medium in which an information recording section is accommodated in a resin molded base material like a cartridge, such as a flexible disk (FD), a magnet-optical (MO) disk, a mini disk (MD), cassette tape, etc.

## Claims

1. A method of manufacturing an information recording medium having a water-based ink absorbing layer on a surface of a base material, the method including a procedure for forming the water-based ink absorbing layer, the procedure comprising the steps of:
(1) coating the surface of the base material with a water-based ink absorbent containing a water-absorptive filler to form a coated layer;
(2) covering a surface of the coated layer with a cover material;
(3) irradiating the coated layer with active energy beam to cure the coated layer; and
(4) removing the cover material from the coated layer.

2. A method of manufacturing an information recording medium having a water-based ink absorbing layer on a surface of a base material, the method including a procedure for forming the water-based ink absorbing layer, the procedure comprising the steps of:
(1a) coating a surface of a cover material with a water-based ink absorbent containing a water-absorptive filler to form a coated layer;
(2a) covering a surface of the coated layer with the base material;
(3) irradiating the coated layer with active energy beam to cure the coated layer; and
(4) removing the cover material from the coated layer.

3. An information recording medium having a base material and a water-based ink absorbing layer on a surface of the base material, the water-based ink absorbing layer being formed by a procedure, the procedure comprising the steps of:
(1) coating the surface of the base material with a water-based ink absorbent containing a water-absorptive filler to form a coated layer;
(2) covering a surface of the coated layer with a cover material;
(3) irradiating the coated layer with active energy beam to cure the coated layer; and
(4) removing the cover material from the coated layer.

4. An information recording medium having a base material and a water-based ink absorbing layer on a surface of the base material, the water-based ink absorbing layer being formed by a procedure, the procedure comprising the steps of:
(1a) coating a surface of a cover material with a water-based ink absorbent containing a water-absorptive filler to form a coated layer;
(2a) covering a surface of the coated layer with the base material;
(3) irradiating the coated layer with active energy beam to cure the coated layer; and
(4) removing the cover material from the coated layer.

5. An information recording medium having a base material and a water-based ink absorbing layer on a surface of the base material, the water-based ink absorbing layer being formed by a procedure, the procedure comprising the steps of:
(1) coating the surface of the base material with a water-based ink absorbent containing a water-absorptive filler to form a coated layer;
(2) covering a surface of the coated layer with a cover material;
(3) irradiating the coated layer with active energy beam to cure the coated layer; and
(4a) not removing the cover material from the coated layer.

6. An information recording medium having a base material and a water-based ink absorbing layer on a surface of the base material, the water-based ink absorbing layer being formed by a procedure, the procedure comprising the steps of:
(1a) coating a surface of a cover material with a water-based ink absorbent containing a water-absorptive filler to form a coated layer;
(2a) covering a surface of the coated layer with the base material;
(3) irradiating the coated layer with active energy beam to cure the coated layer; and
(4a) not removing the cover material from the coated layer.

7. An information recording medium having a base material and a water-based ink absorbing layer containing a water-absorptive filler on a surface of the base material, wherein centerline average roughness (Ra) of the water-based ink absorbing layer is 0.25 µm or smaller, and glossiness of the water-based ink absorbing layer is 48% or higher.

8. The information recording medium according to claim 7, wherein the content of the water-absorptive filler is 5 to 50 wt% relative to the water-based ink absorbing layer.

9. The information recording medium according to any one of claims 3 to 8, wherein the water-absorptive filler is selected from the group consisting of silk, cellulose, collagen, starch, water-absorptive resin powder, silica, calcium carbonate and talc.
